(19) Europäisches Patentamt
European Patent Office
Office européen des brevets

(11) Veröffentlichungsnummer: **0 136 506**
**B1**

(12) # EUROPÄISCHE PATENTSCHRIFT

(45) Veröffentlichungstag der Patentschrift: **03.08.88**

(51) Int. Cl.⁴: **G 03 C 1/76,** C 08 F 220/00, C 08 F 255/00, C 08 F 257/02 // C08F220:00

(21) Anmeldenummer: **84109878.3**

(22) Anmeldetag: **20.08.84**

(54) **Photographisches Silberhalogenidaufzeichnungsmaterial.**

(30) Priorität: **01.09.83 DE 3331542**

(43) Veröffentlichungstag der Anmeldung: **10.04.85 Patentblatt 85/15**

(45) Bekanntmachung des Hinweises auf die Patenterteilung: **03.08.88 Patentblatt 88/31**

(84) Benannte Vertragsstaaten: **BE CH DE FR GB LI**

(56) Entgegenhaltungen: **EP - A - 0 080 225**

(73) Patentinhaber: **Agfa-Gevaert AG, Patentabteilung, D-5090 Leverkusen 1 (DE)**

(72) Erfinder: **Himmelmann, Wolfgang, Dr., Im Ziegelfeld 7, D-5090 Leverkusen 3 (DE)**
Erfinder: **Sackmann, Günter, Dr., Friedenberger Strasse 11, D-5090 Leverkusen 3 (DE)**
Erfinder: **Meyer, Rudolf, Dr., Carl-Rumpff-Strasse 25, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein photographisches Silberhalogenidaufzeichnungsmaterial, das in einer äusseren auf Vorder- und/oder Rückseite angebrachten transparenten Schicht, dispergiert in einem hydrophilen Kolloid, in alkalischen Verarbeitungsflüssigkeiten lösliche Polymerteilchen einer Teilchengrösse kleiner als 10 µm enthält.

Die in den äusseren Schichten photographischer Silberhalogenid-Aufzeichnungsmaterialien üblicherweise enthaltenen hydrophilen Kolloide, z.B. Gelatine, führen zu einer Zunahme der Klebrigkeit der Aufzeichnungsmaterialien bei hohen Luftfeuchtigkeiten und höheren Temperaturen, so dass solche Aufzeichnungsmaterialien, beispielsweise nach Verpackung im Stapel, leicht miteinander verkleben. Diese Klebeneigung zwischen verschiedenen Teilen des Aufzeichnungsmaterials bzw. zwischen dem Aufzeichnungsmaterial und anderen Materialien, die mit ihm in Kontakt kommen, führt in der Kamera, bei der Herstellung, Verarbeitung, Projektion oder Lagerung des Aufzeichnungsmaterials zu zahlreichen Schwierigkeiten.

Um diese Schwierigkeiten zu beheben ist es bekannt, die Aussenschichten von Aufzeichnungsmaterialien durch Einarbeiten feinpulvriger anorganischer Verbindungen, wie Siliciumdioxid, Magnesiumdioxid, Titandioxid oder Calciumcarbonat, oder organischen Verbindungen, wie Polymethylmethacrylat oder Celluloseacetat-propionat, zu mattieren und so ihre Klebrigkeit zu vermindern. Diese «Mattierung» hat jedoch verschiedene Nachteile. So lässt sich z.B. die Aussenschicht nicht homogen herstellen, da die genannten feinpulvrigen Bestandteile in der Beschichtungslösung leicht aggregieren. Ausserdem werden Aufzeichnungsmaterialien mit einer die feinpulverigen Materialien enthaltenden Aussenschicht leichter beschädigt und lassen sich schwieriger in einer Kamera oder einem Projektor transportieren, da ihre Oberfläche nicht genügend gleitfähig ist. Durch die Anwesenheit der feinpulvrigen Materialien in der Aussenschicht wird ferner die Transparenz des Aufzeichnungsmaterials nach der Verarbeitung verringert und die Körnigkeit des Bildes erhöht.

Aus der DE-A 2 758 767 ist ein photographisches lichtempfindliches Material bekannt, das eine äussere lichtunempfindliche Gelatineschicht aufweist, die kolloidale Kieselsäureteilchen einer Grösse von 7 bis 120 nm und einen polymeren Latex enthält, dessen Teilchen 30 bis 80 nm gross sind. Diese Gelatineschicht verleiht dem photographischen Material eine erhöhte Bruch- und Dimensionsstabilität.

Nachteilig an einem so ausgerüsteten photographischen Material ist aber, dass die Zusätze die Transparenz der Schichten verringern und insbesondere bei höheren Feuchtigkeiten (z.B. mehr als 85% r.F.) und Temperaturen um 35 bis 40°C sensitometrisch nachteilige Kontaktflecken beim Aufrollen der Materialien sich nicht vermeiden lassen.

Nach EP-A-80 225 wird die Klebrigkeit von Aufzeichnungsmaterialien durch alkalilösliche Deckschichten, die alkali-unlösliche Partikel enthalten, verringert. Die so erzeugte rauhe Oberfläche verschwindet wieder bei der Verarbeitung, bei der im alkalischen Milieu die Deckschicht abgelöst wird. Nachteilig ist, dass eine ganze Schicht abgelöst und daher entweder eine Schicht mehr gegossen werden muss als erforderlich oder am verarbeiteten Produkt eine Schutzschicht fehlt. Ausserdem reichern sich im Verarbeitungsbad die unlöslichen Partikel an und sorgen hier für Störungen.

Zur Herstellung mattierend wirkender feinkörniger Materialien sind verschiedene Verfahren bekannt. So können durch Emulsionspolymerisation Polymerisatteilchen mit einem Teilchendurchmesser von etwa 5 bis 0,01 µm hergestellt werden, wenn man die Menge des Emulgators (des oberflächenaktiven Mittels), die Polymerisationstemperatur und die Rührbedingungen in geeigneter Weise kontrolliert. Die Verfahrensweise wird z.B. von H. Reinhard, «Dispersionen synthetischer Hochpolymerer», Teil II, Seite 3 ff., Springer Verlag oder von F. Hölscher im entsprechenden Teil I, Seite 31 ff., beschrieben. Auf diese Weise gelingt es jedoch nur Teilchen herzustellen, deren mittlere Grösse um wenigstens 2 µm differiert, die also eine relativ uneinheitliche Teilchengrösse aufweisen. Durch mechanische Pulverisierung, auf die eine Klassierung nach Teilchengrössen folgt, erhält man Polymerisatteilchen mit einer breiten Teilchengrössenverteilung, deren Form nicht kugelförmig, sondern völlig unregelmässig ist.

Kugelförmige Polymerisatteilchen können hergestellt werden durch Auflösen eines Polymerisats in einem mit Wasser nicht mischbaren organischen Lösungsmittel und Versprühen der Lösung aus einer feinen Düse in ein wässriges Medium unter hohem Druck. Die dabei erzielte Teilchengrösse ist jedoch bei weitem nicht gleichmässig und es ist eine Vorrichtung mit einem grossen Volumen erforderlich. Es gibt bisher ganz allgemein kein brauchbares, wirtschaftliches Verfahren zur Herstellung von einheitlichen Polymerisatteilchen mit einer Teilchengrösse innerhalb des Bereiches von 1 bis 10 µm.

Feinteilige Polymerisatteilchen lassen sich auch durch Dispergieren herstellen. Dazu löst man ein oder mehrere Polymerisate in einem Lösungsmittel, das in Wasser unlöslich oder im wesentlichen damit nicht mischbar ist und einen niedrigeren Siedepunkt als Wasser hat oder mit Wasser eine azeotrope Mischung mit einem niedrigeren Siedepunkt als Wasser bildet. Die Polymerisatlösung wird in einem wässrigen Medium als Dispersionsmittel in Form von Tröpfchen dispergiert, wobei man die Viskosität und die Oberflächenspannung in geeigneter Weise einstellt und das Lösungsmittel aus den Tröpfchen entfernt unter Bildung von feinen Polymerisatteilchen. Diese Teilchen können durch anschliessendes Zentrifugieren und durch Trocknen in Form eines Pulvers abgetrennt werden (DE-OS 2 522 692).

Nachteilig an diesem Verfahren ist jedoch, dass die Teilchen beim Rührvorgang erzeugt werden

müssen, also nicht präformiert vorliegen. Die Teilchengrösse ist abhängig von der Konzentration der Polymerisatlösung, dem Verhältnis zwischen der Polymerisatlösung und dem wässrigen Medium, der Art und Menge des hydrophilen Kolloids, der Temperatur, der Rührgeschwindigkeit und dem pH-Wert des wässrigen Mediums. Ausserdem muss das niedrigsiedende Lösungsmittel vorsichtig abdestilliert werden, um die Teilchen nicht zu zerstören.

Präformierte wasserunlösliche Polymerteilchen mit relativ enger Teilchengrössenverteilung, die sich als Mattierungsmittel für photographische Schichten eignen, sind durch Suspensionscopolymerisation von Maleinsäureanhydrid und 1-Olefinen erhältlich (DE-A 2 501 123, 2 919 822 und 3 144 793). Das Verfahren führt zu Teilchen, die zwar in hinreichender Einheitlichkeit bezüglich der Teilchengrösse anfallen, die Teilchen sind jedoch alkaliunlöslich. Sie bleiben deshalb nach der Verarbeitung des photographischen Materials auf der Oberfläche zurück und erhöhen somit die Körnigkeit des lichtempfindlichen Materials.

Es hat daher nicht an Versuchen gefehlt, alkalilösliche Polymerteilchen zu finden, die bei der Verarbeitung in alkalischen Verarbeitungsflüssigkeiten aus der Oberfläche entfernt werden. Hierzu sei auf die Druckschriften US-A 2 322 037, GB-B 878 520, US-A 4 094 848, US-PS 4 142 894, GB-B 2 012 978 und GB-B 1 055 713 verwiesen.

Alle Teilchen, die durch Dispergieren eines säureunlöslichen und alkalilöslichen Mischpolymerisates in Gelatinelösungen erhalten werden, haben den Nachteil, eine breite Teilchengrössenverteilung aufzuweisen. Das hat zur Folge, dass selbst dann, wenn die Hauptmenge der Teilchen z.B. eine Grösse von 4 µm aufweisen sollte, ein erheblicher Anteil kleinerer Teilchen, die eine Mattierung bewirken und ein erheblicher Anteil grösserer Teilchen, die zu Schwierigkeiten beim Beguss führen, in Kauf genommen werden muss. Darüberhinaus ist es äusserst schwierig, eine einmal erreichte Grössenverteilung der Teilchen zu reproduzieren. Eine nachträgliche Korrektur ist dann nur unter Einsatz von Filtrierkaskaden möglich.

Der Erfindung liegt die Aufgabe zugrunde, Aussenschichten zu entwickeln, die die Klebrigkeit eines photographischen Materials unterdrücken und die nach der Verarbeitung hohen Glanz und hohe Transparenz aufweisen.

Gegenstand der Erfindung ist ein photographisches Silberhalogenidaufzeichnugsmaterial, das in einer äusseren, auf Vorder- und/oder Rückseite angebrachten transparenten Schicht, dispergiert in einem hydrophilen Kolloid, in alkalischen Verarbeitungsflüssigkeiten lösliche präformierte Polymerteilchen einer Teilchengrösse kleiner als 10 µm enthält, und das dadurch gekennzeichnet ist, dass die Schicht 10 bis 500 mg/m$^2$ kugelförmige Teilchen einer Teilchengrösse von 0,5 bis 8 µm und einer Teilchengrössenverteilung von $\pm 1$ µm eines Pfropfcopolymerisates aus Methacrylsäure und Methacrylsäuremethylester mit einem aufgepfropften α-Olefin- oder Styrol-Maleinsäurehalbamid-Copolymerisat oder Alkalisalz von alternierenden Copolymerisaten aus Maleinsäureanhydrid und α-Olefinen oder Styrol dispergiert enthält.

Pfropfcopolymerisates aus Methacrylsäure und Methacrylsäuremethylester auf der Pfropfgrundlage eines α-Olefin- oder Styrol-Maleinsäurehalbamid-Copolymerisates oder der Alkalisalze von alternierenden Copolymerisaten aus Maleinsäureanhydrid und α-Olefinen oder Styrol einer Teilchengrösse von 0,5 bis 8 µm und einer Teilchengrössenverteilung von $\pm 1$ µm dispergiert enthält.

Die in der äusseren Schicht des Aufzeichnungsmaterials der Erfindung verwendeten Pfropfcopolymerisate sind bei pH-Werten unterhalb 7 unlöslich, oberhalb pH 8 aber löslich. Sie bestehen aus 80 bis 99% Methacrylsäure und Methacrylsäuremethylester sowie 1 bis 20% eines alternierenden Copolymerisates aus Maleinsäurehalbamid und einem α-Olefin oder Styrol als Pfropfsubstrat. Die Teilchen des Pfropfpolymerisates haben eine Grösse von 1 bis 8 µm, und die Säurezahl des Polymerisates beträgt 200 bis 300, vorzugsweise 210 bis 270.

Die bei einem pH-Wert von 6 unlöslichen, in alkalischem Medium aber löslichen Polymerisatteilchen sind durch radikalisch initiierte Pfropfcopolymerisation von Gemischen aus Methacrylsäure und Methylmethacrylat in Gegenwart verdünnter wässrig/alkoholischer Lösungen der Halbamid/halbammoniumsalze oder der Alkalisalze von alternierenden Copolymerisaten aus Maleinsäureanhydrid und -Olefinen oder Styrol erhältlich.

Dabei entstehen die präformierten, polymeren alkalilöslichen Polymerisatteilchen in feinverteilter wässrig/alkoholischer Suspension als kugelförmige Teilchen in relativ enger Teilchengrössenverteilung. Die Teilchengrössen der Polymerisate liegen zwischen 0,5 und 8 µm, vorzugsweise jedoch zwischen 1,5 und 5 µm.

Da eine wesentliche Voraussetzung für die Verwendbarkeit dieser Teilchen ihre Unlöslichkeit im sauren Milieu sowie im pH-Bereich zwischen 6 und 8 einerseits und andererseits ihre schnelle und gute Löslichkeit im alkalischen Milieu photographischer Entwicklungslösungen (pH grösser als 8) ist, ist es erforderlich diese Teilchen sowohl hinsichtlich ihres Molekulargewichtes als auch ihres Gehaltes an Carboxylgruppen so aufzubauen, dass sie die genannten Kriterien erfüllen. Am geeignetsten sind daher solche Pfropfcopolymerisate, die Grenzviskositätszahlen [η] zwischen 0,3 und 1,2 (dl/g), bevorzugt zwischen 0,3 und 0,8 (dl/g), gemessen in 1%iger wässriger $Na_2CO_3$-Lösung, sowie Säurezahlen zwischen 200 und 300, bzw. einen Gehalt an Methacrylsäure zwischen ca. 30 und 46 Gew.-% aufweisen. Liegt die Säurezahl der Polymerteilchen z.B. unterhalb von 200, so sind sie entweder gar nicht oder aber zu langsam in einer photographischen Entwicklerlösung löslich. Bei Säurezahlen oberhalb von 300 besteht die Gefahr, dass sich die Polymerteilchen bereits in den wässrigen Gelatinedispersionen lösen und dann nicht mehr in der gewünschten Weise wirken

können. Bevorzugte Säurezahlbereiche liegen zwischen 210 und 270. Selbst wenn die Säurezahlen der Polymerteilchen in dem bevorzugten Bereich liegen, so ist dies nicht die alleinige Voraussetzung für ein schnelles Lösen während des photographischen Entwicklungsprozesses. Es ist ausserdem notwendig, dass das Molekulargewicht nicht zu hoch, sondern in einem bevorzugten Grenzviskositätszahlenbereich zwischen 0,3 und 0,8 (dl/g), gemessen in 1%iger wässriger $Na_2CO_3$-Lösung, liegt.

Der gewünschte Molekulargewichtsbereich kann durch den Zusatz von 0,1 bis 2,0 Gew.-%, bezogen auf die eingesetzten Monomeren, an Polymerisationsreglern vom Enolethertyp zum Polymerisationsansatz eingestellt werden. Als bevorzugte Regler kommen dabei Substanzen infrage, die der folgenden allgemeinen Formel entsprechen

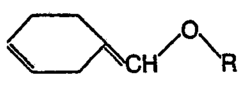

worin R Alkyl $C_{1-20}$, Cylcoalkyl $C_{5-10}$, z.B. Cyclohexyl, Aralkyl $C_{7-20}$, z.B. Benzyl, bedeutet.

Gegenüber den normalerweise zur Molekulargewichtsregelung in Polymeren eingesetzten schwefelhaltigen Verbindungen besitzen die Regler vom Enolethertyp den Vorteil, dass sie praktisch geruchsfrei sind und photographische Schichten nicht nachteilig beeinflussen.

Bei zu hohen Grenzviskositätszahlen der Polymerisate geht die Auflösung der Teilchen im alkalischen Milieu so langsam vor sich, dass dieser Vorgang in der begrenzten Zeitspanne des photographischen Entwicklungsprozesses noch nicht beendet ist.

Die Herstellung der Polymerteilchen erfolgt in wässrig/alkoholischer Phase, wobei das Phasenverhältnis von Wasser zu Alkohol im Bereich von 90 bis 70 zu 10 bis 30 Gew.-Teilen liegt, durch eine radikalisch initiierte Pfropfcopolymerisation eines Gemisches aus Methacrylsäure und Methylmethacrylat auf das wasserlösliche Salz eines alternierenden Copolymerisates aus Maleinsäureanhydrid oder Maleinsäurehalbamid und einem α-Olefin oder Styrol. Als α-Olefine kommen dabei in erster Linie Ethylen, Propylen, Isobutylen oder Diisobutylen infrage. Das Molekulargewicht dieser alternierenden Copolymeren liegt im Bereich zwischen 15 000 und 500 000 und ihre Überführung in wasserlösliche Polyelektrolyte erfolgt durch Umsetzung mit Alkalihydroxiden oder den wässrigen Lösungen von Ammoniak oder aliphatischen Mono- oder Diaminen, wie z.B. Methylamin, Ethylamin, Ethanolamin, Dimethylamin, Diethylamin oder Diethanolamin. Bei der Umsetzung mit den Aminen kommt es nicht wie bei der Reaktion mit den Alkalihydroxiden zur Bildung der Di-Salze, sondern es entstehen die jeweiligen Halbamid/halbammoniumsalze. Die Menge an wasserlöslichem polymerem Pfropfsubstrat beträgt, bezogen auf das zu polymerisierende Comonomerenpaar, zwischen 1 und 20 Gew.-%, wobei der Bereich zwischen 2 und 6 Gew.-% bevorzugt ist. Bei diesem Copolymerisationsverfahren fallen die polymeren Teilchen als wässrig/alkoholische Suspensionen mit einem Gehalt zwischen 10 und 30 Gew.-% an polymeren Teilchen, bezogen auf die Suspension, an.

Neben Pfropfcopolymerisaten können die auf diese Weise erhaltenen Suspensionen zu einem gewissen Anteil auch lineare Copolymerisate enthalten. In keinem Falle aber entstehen vernetzte Produkte, und die Teilchen sind völlig frei von Mikrogel.

Dies lässt sich durch Auflösen der Teilchen in 1%iger wässriger $Na_2CO_3$-Lösung und Bestimmung des Mikrogelgehaltes in der Lösung mittels einer Ultrazentrifuge nachweisen. Durch den Gewichtsanteil des polymeren Pfropfsubstrats kann die Teilchengrösse bzw. die Teilchengrössenverteilung der Polymerteilchen bis zu einem gewissen Grade beeinflusst werden.

Mit zunehmender Menge an Substrat nimmt die Teilchengrösse ab, und die Teilchengrössenverteilung wird enger. Das zeigt, dass die gelösten Polyelektrolyte ausser als Pfropfsubstrat auch als Dispergatoren wirken, die eine Agglomeration der diskreten Polymerpartikel verhindern. Die Teilchengrössen liegen im Bereich zwischen 0,5 und 8 µm, wobei für den beanspruchten Verwendungszweck ein Teilchengrössenbereich von 1,5 bis 5 µm bevorzugt wird.

Die Schutzkolloidwirkung des Pfropfsubstrats zeigt sich auch bei einer Dispergierung der Teilchen in der wässrigen Lösung eines Kolloids wie z.B. Gelatine. Bei einer mikroskopischen Betrachtung solcher Dispersionen sind nur Einzelteilchen aber keine Zusammenlagerungen von Teilchen zu erkennen.

Für die leichte Löslichkeit der Teilchen in alkalischem Medium ist neben dem Molekulargewicht vor allem die Zusammensetzung der Methacrylsäure/Methylmethacrylat-Copolymeren verantwortlich.

Mit zunehmendem Gehalt an Methylmethacrylat nimmt ihre Löslichkeit in wässrig-alkalischem Medium ab, während sie mit ansteigendem Gehalt an Methacrylsäure zunimmt. Für die vorgesehene Anwendung in photographischen Schichten sind solche Produkte geeignet, die Säurezahlen zwischen 200 und 300, bevorzugt zwischen 210 und 270, aufweisen, was einem Methacrylsäuregehalt zwischen ca. 32 und 41,5 Gew.-% entspricht.

Mit Hilfe des beschriebenen Copolymerisationsverfahrens können aber auch Copolymerisate hergestellt werden, deren Säurezahlen ausserhalb des angegebenen Bereiches liegen.

Herstellungsbeispiel

In einem 15 l Rührgefäss, das als Vorlage dient, wird unter ständigem Rühren folgendes Reaktionsgemisch vorgelegt:

4500 g elektrolytfreies Wasser

450 g einer 10 gew.-%igen wässrigen Lösung des Halbamid/halbammoniumsalzes eines alternierenden Copolymerisats aus Styrol und Maleinsäureanhydrid mit einer Grenzviskositätszahl [η] = 0,574 (dl/g) (gemessen in DMF).

1500 g Ethanol
15 g Regler der allgemeinen Formel

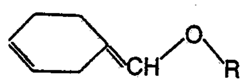

wobei R Benzyl bedeutet,
15 g Kaliumpersulfat, gelöst in
450 g elektrolytfreiem Wasser
600 g Methacrylsäure
900 g Methylmethacrylat.

Von dieser Mischung gibt man zunächst 2250 g in einen 12 l Stahlautoklaven, der mit einem Blattrührer ausgerüstet ist. Dann wird der Autoklav verschlossen, unter einen schwachen $N_2$-Überdruck gebracht und auf eine Temperatur von 65 °C erhitzt. Nach einer Reaktionszeit von einer halben Stunde bei 65 °C wird der Rest des Reaktionsgemisches aus der Vorlage innerhalb von 2 Stunden mittels einer Kolbenpumpe in den Autoklaven eindosiert. Nach beendetem Zupumpen wird noch 4 Stunden bei 65 °C und 3 Stunden bei 75 °C mit einer Geschwindigkeit von 100 U/min gerührt.

Die entstandene feinteilige Suspension wird anschliessend auf Raumtemperatur abgekühlt und abgelassen.

Säurezahl des Copolymeren: 260, entsprechend einem Gehalt von 39,8 Gew.-% Methacrylsäure.
Grenzviskositätszahl: [$\eta$] = 0,456 (dl/g), gemessen in 1%iger wässriger $Na_2CO_3$-Lösung.
Gehalt an Mikrogel: 0%.
Teilchengrösse: 1–3 µm.

Zur Bestimmung der Teilchengrösse werden die Pfropfcopolymerisataufschlämmungen in ein Wasser-Glyzerin-Gemisch (1 : 1) eingerührt und mit einem Lichtmikroskop mit Phasenkontrasteinrichtung bei 1000-facher Vergrösserung ausgezählt und vermessen.

Die in der beschriebenen Weise erhaltenen Dispersionen können in wässrigen Lösungen von hydrophilen Kolloiden mit beliebigen Netzmitteln verteilt werden. Als hydrophile Kolloide können dabei z.B. folgende Verbindungen dienen: Proteine, wie Gelatine, Gelatinederivate, z.B. acetylierte Gelatine, Phthaloyl-Gelatine oder Succinyl-Gelatine, Albumin, Kasein, Gummi-arabicum, Agar-Agar, Alginsäure, Cellulosederivate z.B. Alkylester von Carboxymethylcellulose, vorzugsweise die Methyl- oder Ethylester, Hydroxyethylcellulose, Carboxymethylcellulose, synthetische Polymerisate z.B. Polyvinylalkohol, Polyvinylpyrrolidon, Polyacrylamid, Salze von Polyacrylsäure, Salze von Polymethacrylsäure, Salze von Polymaleinsäure, Salze von Polystyrolsulfonsäure, vorzugsweise die Natrium- oder Kaliumsalze sowie Mischpolymerisate, die mindestens eines der Monomeren der oben angegebenen Polymerisate enthalten. Unter diesen hydrophilen Kolloiden haben amphotere polymere Elektrolyte, wie Gelatine, Gelatinederivate, Kasein und andere Eiweissverbindungen, eine besonders ausgeprägte Wirkung. Die hydrophilen Kolloide können auch einzeln oder in Form einer Kombination verwendet werden. Zu bevorzugten Kolloiden gehören Gelatine, Gelatinederivate, Kasein und andere Eiweissverbindungen. Das Kolloid wird zweckmässig in einer Menge von etwa 1 bis etwa 15 Gew.-%, vorzugsweise in einer Menge von 5 bis 10 Gew.-%, jeweils bezogen auf das Gewicht der Dispersion, verwendet.

Es können den die Dispersion enthaltenden wässrigen Lösungen weiter 0,1 bis 1 Gew.-% oberflächenaktive Mittel, bezogen auf das Gewicht des anwesenden Wassers, zugesetzt werden. Beispiele für geeignete oberflächenaktive Mittel sind Saponin und andere Verbindungen natürlichen Ursprungs, nichtionische oberflächenaktive Mittel, wie Polyalkylenoxide, Glycerinverbindungen wie Monoglyceride oder Glycidolverbindungen, anionische oberflächenaktive Mittel mit einer oder mehreren Säuregruppen, wie z.B. einer oder mehreren Carbonsäure-, Sulfonsäure-, Phosphorsäure-, Sulfonsäureester- oder Phosphorsäureester-Gruppen. Besonders geeignete oberflächenaktive Mittel werden in den US-A 2 271 623, 2 240 472, 2 288 226, 2 676 122, 2 676 924, 2 676 975, 2 691 566, 2 721 860, 2 730 498, 2 742 379, 2 739 891, 3 068 101, 3 158 484, 3 201 253, 3 210 191, 3 294 540, 3 415 649, 3 441 413, 3 442 654, 3 475 174 und 3 545 974, in der DE-A 1 942 665 und in den GB-B 1 077 317 und 1 198 450 sowie in «Kaimen Kassei Zai no Gosei to Sono Ohyo» (Synthesis and Application of Surface Active Agent) von Ryohei Oda et al (publiziert von Maki Publishing Co, 1964), «Surface Active Agents» von J.W. Perry and A.M. Schwartz (publiziert von Interscience Publications Inc., 1958), «Encyclopedia of Surface Active Agents», Band 2, von J.P. Sisley (publiziert von Chemical Publishing Co., 1964) «Kaimen Kassei Zai Binran (Surfactants Encyclopedia)», 6. Auflage (publiziert von Sangyo Tosho Co., 20. Dez. 1966) und dgl., beschrieben. Auch fluorhaltige Netzmittel wie sie beispielsweise in der DE-A 1 961 638 beschrieben werden, sind einsetzbar.

Diese oberflächenaktiven Mittel können ebenfalls allein oder in Form von Kombinationen verwendet werden und besonders geeignete Verbindungen sind solche mit einer $OSO_3M$-Gruppe, wie z.B. Sulfonatester von gewöhnlichen Alkoholen der allgemeinen Formel $R-O-SO_3M$ oder $R-(OCH_2CH_2)_n-OSO_3M$ (worin R eine Alkylgruppe mit 8 bis 30 Kohlenstoffatomen, M eine Alkalimetall- oder Ammoniumion und n eine positive ganze Zahl von bis zu 20 bedeuten) und Alkylbenzolsulfonsäureverbindungen mit der allgemeinen Formel

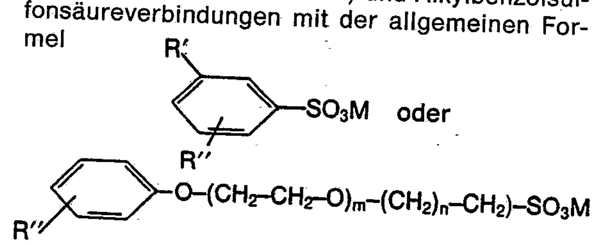
oder

worin R′ Wasserstoff oder eine Alkylgruppe mit 1 bis 18 Kohlenstoffatomen, R″ eine Alkylgruppe mit 1 bis 18 Kohlenstoffatomen, M eine Alkalimetall- oder Ammoniumion, m eine positive ganze Zahl von 0 bis 20 und n die Zahl 3 oder 4 bedeuten.

Die erhaltenen Dispersionen der Pfropfcopolymerisate mit der Teilchengrösse 1–8 µm, vorzugsweise 1,5–5 µm, fallen jeweils zu 70–80% in gleicher Grösse bzw. als Teilchen mit gleichem Korndurchmesser an. Nur 20–30% der Teilchen haben einen grösseren oder kleineren Teilchendurchmesser.

Die Dispersionen können entweder direkt den photographischen Giesslösungen für die äussere Schicht zugesetzt werden oder die Teilchen können in Form von Pasten als fester Rückstand durch Zentrifugieren isoliert werden. Man erhält auf diese Weise sogenannte «Instant-Mattierungsmittel», d.h. Mattierungsmittel, die in jede beliebige photographische Giesszusammensetzung ohne Dispergierhilfsmittel eingerührt werden können. Die Polymerisate sind photographisch inert und verändern die Körnigkeit des Aufzeichnungsmaterials nicht, wenn man sie in der geeigneten Menge von 10 bis 500 mg/$m^2$ einsetzt.

Die mit den Polymerteilchen der Erfindung erreichte vorteilhafte Oberflächenaufrauhung kann dadurch weiter verbessert werden, dass man der die Polymerteilchen enthaltenden Giesszusammensetzung, bevor man sie auf die Oberfläche des photographischen Materials aufträgt, kolloidale Kieselsäure in Form eines Hydrosols zusetzt. Gute Ergebnisse erhält man mit handelsüblichen Hydrosolen einer Teilchengrösse von 50 bis 150 nm, die der Giesszusammensetzung in Mengen von 0,5 bis 2 Gewichtsteilen, bezogen auf 1 Gewichtsteil des hydrophilen Kolloids zugesetzt werden. Die mit dem Hydrosol eingebrachten Kieselsäureteilchen unterscheiden sich von den Polymerteilchen der Erfindung um Grössenordnungen und sind somit an deren spezifischer Wirkung nicht beteiligt. Der Anteil der Kieselsäureteilchen an der Gesamtwirkung besteht lediglich darin, dass diese die ohnehin nur geringe Neigung der nach dem Verfahren der Erfindung hergestellten Oberflächenschichten zur Ausbildung von Glanzstellen oder Farbflecken weiter unterdrücken.

Die zur Herstellung der erfindungsgemässen äusseren Schichten verwendeten Giesszusammensetzungen können gewünschtenfalls weitere Zusätze enthalten, die auf die angestrebte Oberflächenbeschaffenheit keinen Einfluss nehmen. Als Beispiele seien genannt: sehr feinkörnige (Ø<0,1 µm) Latices von harten Polymerisaten wie Polystyrol, Polymethacrylat. Weiter sehr feinkörnige (Teilchendurchmesser <0,1 µm) Latices von weichen Homo- und Copolymerisaten wie Polyethylacrylat, Polyacrylsäurebutylester-Ethylacrylat oder Latices von Polyether oder Polyesterpolyurethanen, wie sie in der Zeitschrift Research Disclosure, Dez. 1978, Industrial Opportunities Ltd. Hampshire, UK, Seite 27 (XII A) beschrieben werden, auch leitfähigkeitserhöhende Verbindungen wie in «Research Disclosure», Dez. 1978, Seite 27 (XIII A) beschrieben, schliesslich Härtungsmittel wie sie in «Research Disclosure», Dez. 1978, Seite 26 unter (X) und Begiesshilfsmittel wie sie ebenda unter (XI) beschrieben werden, weiter gleitfähigkeitserhöhende Mittel, wie Silikonöldispersionen und Substanzen, die die Viskosität der Giesslösung erhöhen.

Die erfindungsgemässen äusseren Schichten können dazu verwendet werden, den Gelatineschichten des photographischen Materials das Härtungsmittel zuzuführen. Bei diesem bekannten Härtungsverfahren durch Überschichtung eines Härtungsmittels gelangt das Härtungsmittel durch Diffusion in die tiefer liegenden Schichten. Es ist so möglich, z.B. ein farbphotographisches Mehrschichtenmaterial in einem Schritt zu härten. Gebräuchlich für diese Arbeitsweise sind vor allem die sogenannten schnellwirkenden Härtungsmittel. Als Beispiele für solche Härtungsmittel seien N-carbamoyl- und N-carbamoyloxypiridinium-Verbindungen (US-A 3 880 665), Sulfogruppen enthaltende N-carbamoylpyridinium-Verbindung in Form der freien Betaine und als Metallsalze (US-A 4 063 952) 2-Alkoxy-N-carboxydihydrochinolinester (US-A 4 013 468), Isoxazoliumsalze (US-A 3 321 313) oder Carbodiimide (DE-C 1 148 446 und DE-A 2 439 553) genannt.

Die erfindungsgemäss verwendeten Polymerisate lassen sich mit Vorteil in den Schutz oder Oberflächenschichten von photographischen Schwarz-Weiss-Materialien, von Colormaterialien und in den sogenannten Non-Curling Schichten von Roll- und Kleinbildfilmen oder Planfilmen einsetzen.

Die folgenden Beispiele dienen der Erläuterung der Erfindung.

Pfropfcopolymerisat 1
als Dispersion von 50 Teilen Pfropfcopolymerisat in 100 Teilen einer Mischung von 75 : 25 Gew.-% Wasser/Ethanol.

[η] = 0,358 (dl/g), gemessen in 1%iger wässriger $Na_2CO_3$-Lösung.

Methacrylsäureanteil: 32,8%, Methylmethacrylatanteil: 64,7%;

2,5% Copolymerisat Styrol/Maleinsäurehalbamid, unlöslich bei pH <8.

Die Teilchengrössenverteilung ist in Fig. 1 dargestellt.

Pfropfcopolymerisat 2

[η] = 0,392 (dl/g), gemessen in 1%iger wässriger $Na_2CO_3$-Lösung.

Methacrylsäureanteil: 33%; Methylmethacrylatanteil: 64,5%;

2,5% Copolymerisat Styrol-Maleinsäurehalbamid, unlöslich bei pH <8.

Die Teilchengrössenverteilung ist in Fig. 2 dargestellt.

Pfropfcopolymerisat 3

[η] = 0,456 (dl/g), gemessen in 1%iger wässriger $Na_2CO_3$-Lösung.

Methacrylsäureanteil: 39,9%; Methylmethacrylatanteil: 57,7%;

2,5% Copolymerisat Styrol-Maleinsäurehalbamid, unlöslich bei pH <8.

Die Teilchengrössenverteilung ist in Fig. 3 dargestellt.

Pfropfcopolymerisat 4

[η] = 0,345 (dl/g), gemessen in 1%iger wässriger $Na_2CO_3$-Lösung.

Methacrylsäureanteil: 36,2%, Methylmethacrylatanteil: 61,3%;

2,5% Copolymerisat Styrol-Maleinsäurehalbamid, unlöslich bei pH <8.

Die Teilchengrössenverteilung ist in Fig. 4 dargestellt.

In den Figuren 1 bis 4 ist die Häufigkeitsverteilung der Teilchendurchmesser der angegebenen Pfropfcopolymerisate als die den einzelnen Teilchendurchmessern (µm) entsprechende Häufigkeitsdichte (1/µ) dargestellt. Jede der Darstellungen enthält zusätzlich die zugehörige Summenhäufigkeitskurve (integrale Verteilung).

Bei den Pfropfcopolymerisaten 3 und 4 handelt es sich jeweils um Mischungen von 3 Dispersionen mit enger Teilchengrössenverteilung (Bimodale Verteilung).

Beispiel 1

Es werden folgende Giesszusammensetzungen für die Herstellung von einer Oberflächenschutzschicht hergestellt (%-Angaben bedeuten im folgenden, wenn nicht anders angegeben, Gewichtsprozent):

400 g Gelatinelösung 15%ig
2800 g Wasser (entsalzt)
80 g Netzmittel der Formel

$$C_8F_{17}SO_3^{\ominus}[N(C_2H_5)_4]^{\oplus}$$

4%ig in Wasser

In diese Zusammensetzung werden jeweils 4 g des unten angegebenen Pfropfcopolymerisates (kurz Polymerisat genannt), eingerührt.

Kurz vor dem Auftragen der Giesszusammensetzung werden 2000 g einer 10 gew.-%igen wässrigen Lösung des Härtungsmittels der Formel

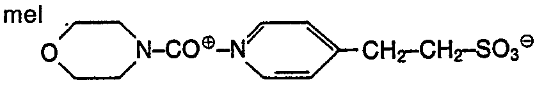

zugesetzt.

Nassauftrag der Giesszusammensetzungen: 50 g/m²; pH 6,5–7,0.

Obiger Rezeptur entsprechend werden folgende Giesszusammensetzungen hergestellt:

A Vergleichsprobe, ohne Polymerisat
B Giesslösung enthaltend Polymerisat 1
C Giesslösung enthaltend Polymerisat 2
D Giesslösung enthaltend Polymerisat 3
E Giesslösung enthaltend Polymerisat 4

Ausserdem werden als Vergleichsproben Giesszusammensetzungen hergestellt, die anstelle eines Polymerisates folgende, nicht erfindungsgemässe, bekannte Mattierungsmittel enthalten;

| | | |
|---|---|---|
| F | Poly-methylmethacrylat-Teilchen (entsprechend US-A 2 322 037) | Ø 3–8 µm |
| G | Polytetrafluorethylen-Teilchen | Ø 2–6 µm |
| H | Calciumcarbonat | Ø 1–5 µm |
| I | Acetylcellulose | Ø 3–8 µm |

Die Giesszusammensetzungen werden mit einer Giessmaschine auf einen ungehärteten Colornegativfilm als oberste Deckschicht aufgetragen (Nassauftrag 50 g Zusammensetzung pro m²) und die Schicht bei 25 °C und 60% rel. Luftfeuchtigkeit getrocknet. Die Deckschichten bilden eine Trokkenschicht von 0,6–0,7 g/m².

Der verwendete Colornegativfilm hat einen konventionellen Aufbau. Auf eine Cellulosetriacetunterlage werden nacheinander eine rotsensibilisierte Silberhalogenidschicht mit emulgiertem Blaugrün-Farbkuppler, eine Zwischenschicht, eine grünsensibilisierte Silberhalogenidschicht mit einem Purpurkuppler, eine Gelbfilterschicht und eine blausensibilisierte gelbkupplerhaltige Silberhalogenidschicht aufgetragen.

Die Zwischenschichten bestehen aus Gelatine und einem Giesshilfsmittel, die Gelbfilterschicht enthält ausserdem gelbes kolloidales Silber. Die Schichtdicken der silberhalogenidhaltigen Schichten liegen zwischen 5 und 6 µm, die der Zwischenschicht bei 1–2 µm. Der Film wird ohne Härtungsmittel gegossen und durch die Überschichtung mit der obersten Deckschichtzusammensetzung gehärtet.

Die Farbkupplerl und Giesshilfsmittel sind in der folgenden Tabelle enthalten.

Die Proben A bis I werden nach der Trocknung in folgender Weise geprüft:

Prüfung 1: Glanzstellen

Die Proben werde in 5 cm² grosse Stücke geschnitten und 2 Tage bei 30 °C und 90% Luftfeuchtigkeit konditioniert. Die Proben werden dann jeweils Schichtseite gegen Rückseite einen Tag lang unter Druck gelagert. Dann werden die Proben auseinandergerissen und die Grösse der verklebten Oberfläche abgeschätzt (blanke Stellen in der Oberfläche).

Prüfung 2: Patronenauszug

Ein Film von 35 mm Breite und 125 cm Länge wird in eine Filmpatrone eingespult und 7 Tage bei 90% r.F. und 35 °C gelagert. Anschliessend wird die Auszugskraft (g) beim Herausziehen des Filmes aus der Patrone bestimmt und registriert. In der nachstehenden Tabelle wird jeweils der Maximalwert angegeben. Für die Praxis soll die Auszugskraft nicht höher als 300 g sein.

Prüfung 3: Gelbfleckentest

Der nach Prüfung 2 gelagerte Film wird photographisch entwickelt und auf sichtbare Fehler geprüft, die durch Lagerung, Druck und Feuchte entstanden sind. Die Zahl und Grösse der unterschiedlich grossen farbigen Flecken wird in %, bezogen auf die geprüfte Fläche, bewertet. Ein Film mit einer geeigneten Schutzschicht soll weniger als 5% Gelbflecken zeigen.

Bestandteil Rotempfindliche Grünempfindliche Blauempfindliche Emulsionsschicht

| | | | |
|---|---|---|---|
| Farbkuppler | 4-Chlor-N-n dodecyl-1-hydroxy-naphthamid (0,88 g/m$^2$) | 1,2,4,6-Trichlorphenyl-3-[3-(u-2,4-di-t-amyl-phenoxy)acetamido]benzamido-5-pyrazolon (0,75 g/m$^2$) | 3-(2,4-Diamyl phenoxyacetamido)-o-(4-methoxybenzoyl)-acetanilid (1,31 g/m$^2$) |
| Beschichtungshilfsmittel | Natriumsalz der Dodecylbenzolsulfonsäure (42 mg/m$^2$) | Natriumsalz der Dodecylbenzolsulfonsäure (51 mg/m$^2$) | Natriumsalz der Dodecylbenzolsulfonsäure (67 mg/m2) |
| | Natriumsalz der Nonylphenoxypolyethylenoxypropansulfonsäure (53 mg/m$^2$) | Natriumsalz der Nonylphenoxypolyethylenoxypropansulfonsäure (64 mg/m$^2$) | Natriumsalz der Nonylphenoxypolyethylenoxypropansulfonsäure (84 mg/m$^2$) |
| Schichtdicke | 5 µm | 6 µm | 5 µm |

Prüfung 4: Körnigkeit

Die Körnigkeit eines photographischen Bildes wird durch das entwickelte Farbkorn sowie durch Dispersionen und Mattierungsmittel vor allem in den obersten Schichten verursacht. Sie wird durch Bestimmung des δ-D-Wertes mit einer 29 µm Lochblende bestimmt wie dies von J.H. Altmann in Appl. Optics, Volume 3, (1964) Seiten 35–38 beschrieben wird. Die Körnigkeit von 1,8 ist ein in der Photographie angestrebter Wert.

Prüfung 5: Oberflächenglanz

Bestimmt wird die Reflexion (in %) eines Lichtstrahls an der Schichtoberfläche. Eine Gelatineschicht, die keine dispergierten Teilchen enthält, zeigt eine Reflexion von 100%.

| Probe | Prüfung 1 (Glanzstellen) in % | Prüfung 2 (Patronenauszug) in g | Prüfung 3 (Farbflecken) in % | Prüfung 4 (Körnigkeit) δ-D-Wert | Prüfung 5 (Glanz vor/nach Verarbeitung |
|---|---|---|---|---|---|
| A | 80–90 | 1000–1500 | 20–50 | 1,8 | 94/95 |
| Erfindungsgemäss | | | | | |
| B | <10 | 200–250 | 0–5 | 1,8 | 80/94 |
| C | <10 | 200–250 | 0–5 | 1,7 | 88/93 |
| D | <10 | 150–250 | 0–5 | 1,8 | 85/92 |
| E | <10 | 200–250 | 0–5 | 1,9 | 88/93 |
| Vergleich: | | | | | |
| F | <10 | 200–250 | 0–8 | 2,2 | 85/87 |
| G | <10 | 200–250 | 0–8 | 2,0 | 80/88 |
| H | 20–30 | 600–800 | 10–20 | 2,1 | 80/87 |
| I | <10 | 150–250 | 0–5 | 2,3 | 80/83 |

Die in der vorhergehenden Tabelle zusammengestellten Ergebnisse zeigen die insgesamt vorteilhaften Eigenschaften der Polymerisatteilchen der Erfindung. Zwar erreichen einige der Vergleichsproben in einzelnen Prüfungen Ergebnisse, die denen der erfindungsgemässen Proben vergleichbar sind, jedoch liefern allein die erfindungsgemässen Proben gleichbleibend günstige Ergebnisse durch alle Tests hindurch, einschliesslich, und dies ist bemerkenswert, des Körnigkeitstestes. Der Oberflächenglanz der Schichten, die die erfindungsgemässen alkalilöslichen Polymerisatteilchen enthalten, ist nach der Verarbeitung sehr hoch und die Körnigkeit entsprechend gering, was sich offensichtlich nicht allein damit erklären lässt, dass die Polymerisatteilchen im Laufe der alkalischen Verarbeitung entfernt werden. Der Anteil der grösseren Teilchen in Dispersionen mit einem breiten Grössenverteilungsspektrum mach sich bei Prüfung 4 besonders bemerkbar. Alle Vergleichsdispersionen mit unlöslichen Teilchen und üblichem Grössenverteilungsspektrum (etwa ±5 µm) zeigen bei dieser Untersuchung eine höhere Körnigkeit. Diese wirkt sich in der photographischen Praxis höchst störend aus, besonders bei mittelempfindlichen Colorfilmen.

Beispiel 2

Zur Umhüllung der Pfropfcopolymerisatteilchen werden verschiedene Kolloide verwendet. In 3 l Bechergläsern werden jeweils 1900 ccm Wasser vorgelegt und darin 100 g

a) sauer geäscherte Gelatine (Isoelektrischer Punkt: 9)
b) Acetylgelatine (durch Umsetzung mit 10 Gew.-% Acetanhydrid erhalten)
c) Polyvinylpyrrolidon (Molgewicht 50 000)
d) Cellulosesulfat

aufgelöst.

Jede der Proben wird mit 4 g eines der Pfropfcopolymerisate 1 bis 4 versetzt. Dann werden die Mischungen eine halbe Stunde unter Rühren digeriert. Anschliessend werden die Proben durch ein Gazefilter gegossen und zentrifugiert. Man erhält eine Vorratspaste, die 50 bis 60 Gew.-% Pfropfcopolymerisatteilchen enthält.

Wie in Beispiel 1 beschrieben, werden die Pasten einzelnen Deckschichtgiesszusammensetzungen zugesetzt und die Giesszusammensetzungen auf die Schichtseite eines Colornegativfilms aufgetragen.

Die Deckschichtgiesszusammensetzungen haben folgende Zusammensetzung:

| | |
|---|---|
| 400 g | wässrige Gelatinelösung 15 Gew.-% |
| 2600 g | Wasser (entsalzt) |
| 70 g | 4 gew.-%ige Lösung des Netzmittels $C_7F_{15}COO^{\ominus}(NH_4)^{\oplus}$ |
| 4 g | eines der umhüllten Pfropfcopolymerisate 1 bis 4 |
| 1000 g | einer 10 gew.-%igen wässrigen Lösung eines Umsetzungsproduktes von Taurin mit der Verbindung $C(CH_2-SO_2-CH=CH_2)_4$ (1 : 1 molar) als Vernetzungsmittel. |

Man erhält in allen Fällen Deckschichten, in der die Teilchen aggregatfrei vorliegen. Die Ergebnisse werden durch mikroskopischen Vergleich der Proben ermittelt.

Die Prüfung der Proben auf Wirksamkeit der Deckschichten wird nach den in Beispiel 1 angegebenen 4 Methoden durchgeführt.

Die Probe A enthält Pfropfcopolymerisat 1, umhüllte mit sauergeäscherter Gelatine;

B enthält Pfropfcopolymerisat 2, umhüllt mit Acetylgelatine

C enthält Pfropfcopolymerisat 3, umhüllt mit Polyvinylpyrrolidon

D enthält Pfropfcopolymerisat 4, umhüllt mit Cellulosesulfat.

Als Vergleichsprobe E dient ein Schichtaufbau, der eine Deckschicht ohne Pfropfcopolymerisat enthält. Die trockenen Deckschichten sind 0,6–0,7 µm dick (ca. 0,6–0,7 g/m² Auftrag).

| Probe | Prüfung 1 (Glanzstellen) in % | Prüfung 2 (Patronenauszug) in g | Prüfung 3 (Farbflecken) in % | Prüfung 4 (Körnigkeit) δ-D-Wert |
|---|---|---|---|---|
| A | 10 | 200–250 | 0–3 | 1,9 |
| B | 8–10 | 200–250 | 0–3 | 1,9 |
| C | 15 | 200–250 | 0–3 | 1,8 |
| D | 10 | 200–250 | 0–3 | 1,8 |
| E | 80–90 | 1000–1500 | 20–50 | 1,8 |

Die Auszugskraft (Prüfung 2) der Probe E, die kein Pfropfcopolymerisat enthält, ist extrem hoch (starke Verklebung). In der Praxis darf der Wert von 300 g nicht überschritten werden. Die Probe ist somit unbrauchbar.

Die Ergebnisse zeigen, dass die alkalilöslichen Pfropfcopolymerisatteilchen der Erfindung in hervorragender Weise und unabhängig von dem umhüllenden Kolloid wirksam werden. Die Teilchen verhindern den Kontakt einer Emulsionsseite mit einer Rückseite eines aufgewickelten photographischen Filmmaterials, da sie zum Teil über die Oberfläche der Deckschicht hinausragen. Ein Vergleich der Teilchenmengen, die pro Flächeneinheit des photographischen Materials vor und nach der Colorverarbeitung in der Schutzschicht vorhanden sind, zeigt, dass die Teilchen im alkalischen Entwickler zu 80% aufgelöst wurden.

Beispiel 3

Die Wirkung der erfindungsgemässen Pfropfcopolymerisate lässt sich durch Zusatz von kolloidaler Kieselsäure in Form von $SiO_2$-Hydrosolen oder durch Zusatz eines Latex von einem harten Polymerisat oder Copolymerisat mit einer Glasübergangstemperatur von über 40 °C und einer Teilchengrösse von unter 0,5 µm, wie Polymethylmethacrylat, zu der Schutzschichzusammensetzung steigern. Als viskositätserhöhendes Mittel wird polystyrolsulfonsaures Natrium zugesetzt oder ein Copolymerisat der Struktur

$[-(CH_2-CH-)_1\quad(CH_2-CH-)_9-]$

$\quad\quad CONH_2 \quad\quad CO-NH-C(CH_3)_2-CH_2-SO_3-Na^{\oplus}$

zugesetzt.

Es werden folgende Deckschichtzusammensetzungen hergestellt:

| | A | B | C |
|---|---|---|---|
| Gelatinelösung (15%ig in Wasser) | 400 g | 200 g | 400 g |
| Wasser (entsalzt) | 2.800 g | 2.800 g | 2.800 g |
| polystyrolsulfonsaures Natrium (10%ig in Wasser) | 60 g | 30 g | 30 g |
| Pfropfcopolymerisat 1 | 4 g | 4 g | 4 g |
| Kieselsol, 30 Gew.-% in Wasser, Teilchengrösse 14 nm | – | 100 g | – |
| Polymethylmethacrylat (in Latexform) 20%ig in Wasser | – | – | 50 g |
| Netzmittel des Beispiels 1 Gew.-% in Wasser | 80 g | 80 g | 80 g |
| Härtungsmittel (10 Gew.-% in Wasser) der unten angegebenen Formel | 2.000 g | 2.000 g | 2.000 g |

Der pH der Lösungen beträgt 6,75–7; der Nassauftrag 50 g/m$^2$.

Das Härtungsmittel entspricht der Formel

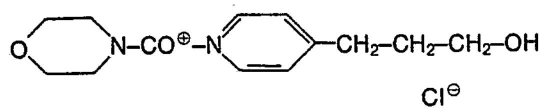

Die Deckschichtlösung wird auf einen ungehärteten Colornegativfilm gegossen und getrocknet.

Anschliessend wird die Prüfung wie in Beispiel 1 angegeben durchgeführt.

| Deckschicht | Prüfung 1 (Glanzstellen) in % | Prüfung 2 (Patronenauszug) in g | Prüfung 3 (Farbflecken) in % | Prüfung 4 (Körnigkeit) δ-D-Wert |
|---|---|---|---|---|
| A | 5–10 | 150–250 | 0–3 | 1,8 |
| B | 0–5 | 150–200 | 0 | 1,8 |
| C | 0–5 | 150–200 | 0 | 1,9 |

Glanzstellen und Farbflecken lassen sich durch Kombination der erfindungsgemässen Pfropfcopolymerisate mit Kieselsol oder Latex wie Probe B und C zeigen praktisch völlig vermeiden.

Beispiel 4

Vergleichsdispersion (A):

Zum Vergleich wird eine Dispersion einer porösen alkalilöslichen Substanz (entsprechend US-PS 4 094 848) in einer wässrigen Gelatinelösung hergestellt:

20 g Gelatine werden in 160 g Wasser gequollen und bei 40 °C gelöst.

Man setzt als Netzmittel 0,75 g des Natriumsalzes von Dodecylbenzol-Sulfonsäure gelöst in 40 g Wasser zu. Die Mischung wird auf 35 °C abgekühlt, dann dispergiert man mittels eines Mischgerätes bei 1500 U/min eine Lösung von

20 g Copolymerisat aus 63% Methacrylsäuremethylester und 37% Methacrylsäure

70 g tert. Butanol und

70 g Essigester

in die Gelatinelösung ein.

Man dampft das Lösungsmittelgemisch langsam während 2 Stunden unter schwachem Rühren ab. Nach dem Filtrieren durch ein Filtertuch, erhält man Teilchen mit einem Teilchengrössengemisch von 1–5 µm. Die grössten Teilchen haben eine Grösse von 10 bis 15 µm. Die Teilchen haben eine genarbte poröse Oberfläche und sind opak. Fig. 5 zeigt eine elektronenmikroskopische Vergrösserung dieser Teilchen.

Erfindungsgemässe Dispersion (B):

Die wässrig-alkoholische Aufschlämmung des Pfropfcopolymerisates 1 wird in einer Gelatinelösung mit einem normalen Laborrührer mit einer Rührgeschwindigkeit von 60 U/min verteilt. Man

gelangt so direkt, ohne Abdampfen des Lösungsmittels und ohne besondere Dispergiermassnahmen zu einer Dispersion folgender Zusammensetzung:

20 g Gelatine in
160 g Wasser,
20 g Pfropfcopolymerisat 1 in einer Mischung von 30 g Wasser und 10 g Ethanol

Die Mischung ist als Vorratslösung geeignet.

Der Vorteil der erfindungsgemässen Probe gegenüber der Vergleichsprobe besteht darin, dass die Teilchengrösse und deren Verteilung durch die Pfropfpolymerisation vorgegeben ist und die Aufschlämmung der Pfropfcopolymerisate einer Giesslösung zugegeben werden kann, ohne dass eine Agglomeration der Teilchen eintritt. Die erfindungsgemässen Teilchen sind klar und haben eine glatte Oberfläche (siehe Fig. 6). Bei der Vergleichsprobe ist die Teilchengrösse von der Menge und Art des Lösungsmittels, der Menge und Art des Netzmittels, von der Temperatur und von der Art des Dispergierens abhängig. Der Ansatz enthält überdies brennbare Lösungsmittel, die vorsichtig entfernt werden müssen, um eine Aggregatbildung zu vermeiden.

Beide Teilchenproben werden folgender Deckschichtzusammensetzung einverleibt:

400 g Wasser
70 g 4%ige wässrige Lösung des Netzmittels $C_7F_{15}COO^{\ominus}(NH_4)^{\oplus}$,
40 g einer der beiden oben beschriebenen Dispersionen (10 Gew.-% Polymerisat)
500 g einer 10%igen wässrigen Härterlösung eines Umsetzungsproduktes von Taurin mit der Verbindung $C(CH_2{-}SO_2{-}CH{=}CH_2)_4$ (1 : 1 molar)

Die Giesszusammensetzungen werden auf die Schichtseite eines nicht gehärteten Colornegativfilms aufgetragen.

Probe A enthält die Vergleichsdispersion (A)

Probe B enthält das erfindungsgemässe Pfropfcopolymerisat 1 als Dispersion (B)

Probe C enthält keine Polymerisate.

Die Prüfung der Proben A bis C auf Wirksamkeit der Polymerisate als Abstandshalter werden wie im Beispiel 1 beschrieben durchgeführt:

| Probe | Prüfung 1 (Glanzstellen) in % | Prüfung 2 (Patronenauszug) in g | Prüfung 3 (Farbflecken) in % | Prüfung 4 (Körnigkeit) δ-D-Wert |
|---|---|---|---|---|
| Probe A (Vergleich) | 5–10 | 250–300 | 0–3 | 2,0 |
| Probe B (erfindungsgemäss) | 0–5 | 200–250 | 0–3 | 1,8 |
| Probe C (ohne Polymerisat) | 80–90 | 900–1200 | 20–40 | 1,8 |

Es zeigt sich, dass das photographische Material mit den Teilchen nach der Verarbeitung einen hohen Oberflächenglanz aufweist. Die erfindungsgemässen Teilchen mit ihrer glatten Oberfläche haben in der Oberfläche der Deckschicht keine störenden Spuren hinterlassen.

Die zum Vergleich herangezogenen Teilchen dagegen haben auf der Oberfläche Krater zurückgelassen, die den Glanz der Oberfläche beeinträchtigen und sie haben eine erhöhte Körnigkeit bewirkt.

## Patentansprüche

1. Photographisches Silberhalogenidaufzeichnungsmaterial, das in einer äusseren auf Vorder- und/oder Rückseite angebrachten transparenten Schicht, dispergiert in einem hydrophilen Kolloid in alkalischen Verarbeitungsflüssigkeiten lösliche präformierte Polymerteilchen einer Teilchengrösse kleiner als 10 µm enthält, dadurch gekennzeichnet, dass die Schicht 10 bis 500 mg/m$^2$ kugelförmige Teilchen einer Teilchengrösse von 0,5 bis 8 µm und einer Teilchengrössenverteilung von ±1 µm eines Pfropfcopolymerisates aus Methacrylsäure und Methacrylsäuremethylester mit einem aufgepfropften α-Olefin- oder Styrol-Maleinsäurehalbamid- oder Maleinsäurecopolymerisat dispergiert enthält.

2. Photographisches Silberhalogenidaufzeichnungsmaterial nach Anspruch 1, dadurch gekennzeichnet, dass die in der äusseren Schicht enthaltenen Polymerteilchen aus 80 bis 99% Methacrylsäure und Methacrylsäuremethylester und 1 bis 20% eines alternierenden Copolymerisates aus Maleinsäurehalbamid und einem α-Olefin oder Styrol als Pfropfsubstrat mit einer Säurezahl von 200–300 bestehen.

3. Photographisches Silberhalogenidaufzeichnungsmaterial nach Anspruch 2, dadurch gekennzeichnet, dass alternierende Copolymerisate als Alkalisalze vorliegen.

4. Photographisches Silberhalogenidaufzeichnungsmaterial nach Anspruch 1, dadurch gekennzeichnet, dass die Polymerteilchen eine Grösse

von 1,5 bis 5 µm haben und das Polymer eine Säurezahl von 210 bis 270 hat.

5. Photographisches Silberhalogenidaufzeichnungsmaterial nach Anspruch 1, dadurch gekennzeichnet, dass die äussere Schicht als hydrophiles Kolloid Gelatine und zusätzlich Kieselsäure enthält, deren Teilchengrösse kleiner als 0,1 µm ist.

6. Photographisches Silberhalogenidaufzeichnungsmaterial nach Anspruch 1, dadurch gekennzeichnet, dass die äussere Schicht zusätzlich ein Homo- oder Copolymerisat mit einer Teilchengrösse kleiner als 0,1 µm und einer Glasübergangstemperatur von mehr als 40 °C enthält.

**Claims**

1. Photographic silver halide recording material in which preformed polymer particles having a particle size of less than 10 µm which are soluble in alkaline processing liquids are dispersed in a hydrophilic colloid in an outer transparent layer applied to the front and/or back of the material, characterised in that the layer contains, dispersed therein, from 10 to 500 mg/m$^2$ of spherical particles having a particle size of from 0.5 to 8 µm and a particle size distribution of $\pm 1$ µm of a graft copolymer of methacrylic acid and methyl methacrylate on which is grafted an α-olefine- or styrene-maleic acid semiamide- or maleic acid-copolymer.

2. Photographic silver halide recording material according to claim 1, characterised in that from 80 to 99% of the polymer particles contained in the outer layer consist of methacrylic acid and methyl methacrylate and 1 to 20% of the polymer particles consist of an alternating copolymer of maleic acid semiamide and an α-olefine or styrene as graft substrate with an acid number of from 200 to 300.

3. Photographic silver halide recording material according to claim 2, characterised in that alternating copolymers are present as alkali metal salts.

4. Photographic silver halide recording material according to claim 1, characterised in that the size of the polymer particles is from 1.5 to 5 µm and the polymer has an acid number of from 210 to 270.

5. Photographic silver halide recording material according to claim 1, characterised in that the outer layer contains, as hydrophilic colloid, gelatine and additional silica having a particle size of less than 0.1 µm.

6. Photographic silver halide recording material according to claim 1, characterised in that the outer layer in addition contains a homo- or copolymer with a particle size of less than 0.1 µm and a glass transition temperature above 40 °C.

**Revendications**

1. Support photographique d'enregistrement à l'halogénure d'argent, qui contient dans une couche externe transparente disposée au recto et/ou au verso, en dispersion dans un colloïde hydrophile, des particles d'un polymère préformé soluble dans des liquides alcalins de traitement, d'un diamètre inférieur à 10 µm, caractérisé en ce que la couche contient, en dispersion, 10 à 500 mg/m$^2$ de particules sphériques, d'un diamètre de 0,5 à 8 µm avec une répartition de diamètres de $\pm$ 1 µm, d'un copolymérisat de greffage d'acide méthacrylique et d'ester méthylique d'acide méthacrylique avec un copolymérisat greffé de semi-amide d'acide maléique ou d'acide maléique et d'α-oléfine ou de styrène.

2. Support photographique d'enregistrement à l'halogénure d'argent suivant la revendication 1, caractérisé en ce que les particules de polymère contenues dans la couche externe sont constituées de 80 à 99% d'acide méthacrylique et d'ester méthylique d'acide méthacrylique et de 1 à 20% d'un copolymérisat alterné de semi-amide d'acide maléique et d'une α-oléfine ou de styrène comme substrat de greffage, avec un indice d'acide de 200 à 300.

3. Support photographique d'enregistrement à l'halogénure d'argent suivant la revendication 2, caractérisé en ce que des copolymérisats alternés sont présents sous forme de sels alcalins.

4. Support photographique d'enregistrement à l'halogénure d'argent suivant la revendication 1, caractérisé en ce que les particules de polymère ont un diamètre de 1,5 à 5 µm et le polymère a un indice d'acide de 210 à 270.

5. Support photographique d'enregistrement à l'halogénure d'argent suivant la revendication 1, caractérisé en ce que la couche externe contient comme colloïde hydrophile de la gélatine et en outre de l'acide silicique dont le diamètre de particules est inférieur à 0,1 µm.

6. Support photographique d'enregistrement à l'halogénure d'argent suivant la revendication 1, caractérisé en ce que la couche externe contient en outre un homopolymérisat ou copolymérisat ayant des diamètres de particules de moins de 0,1 µm et une température de transition vitreuse de plus de 40 °C.

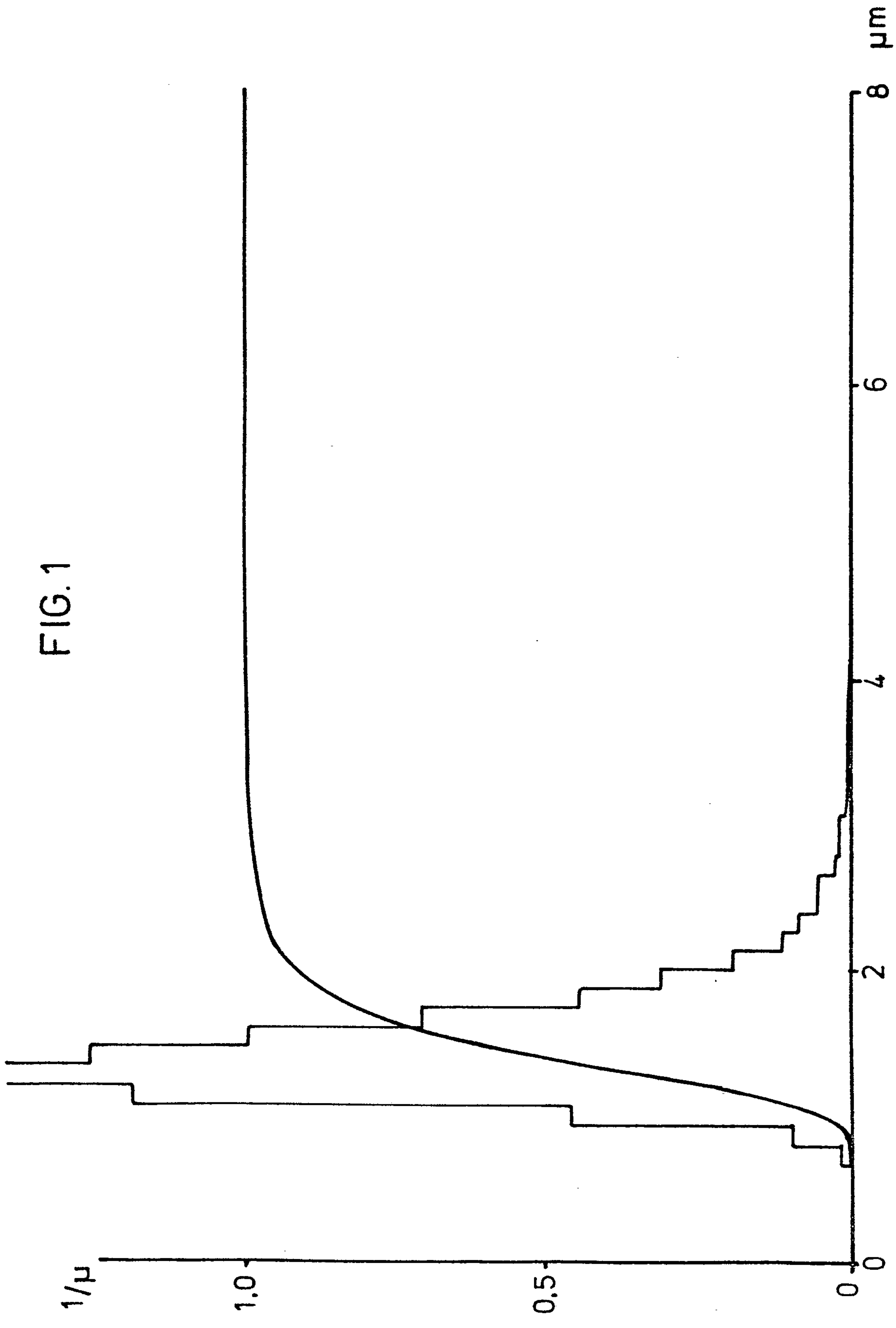


FIG. 1

FIG. 2

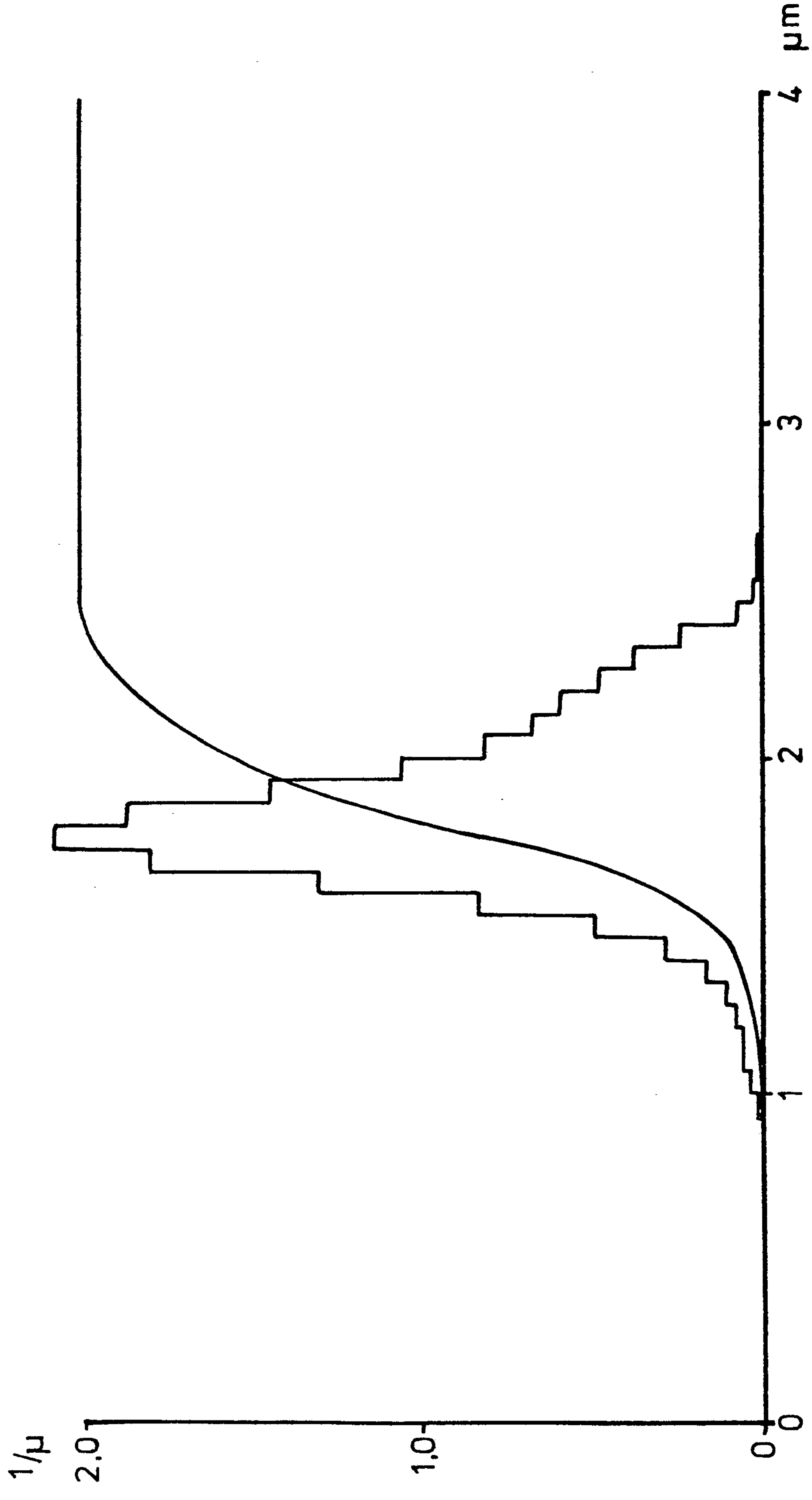

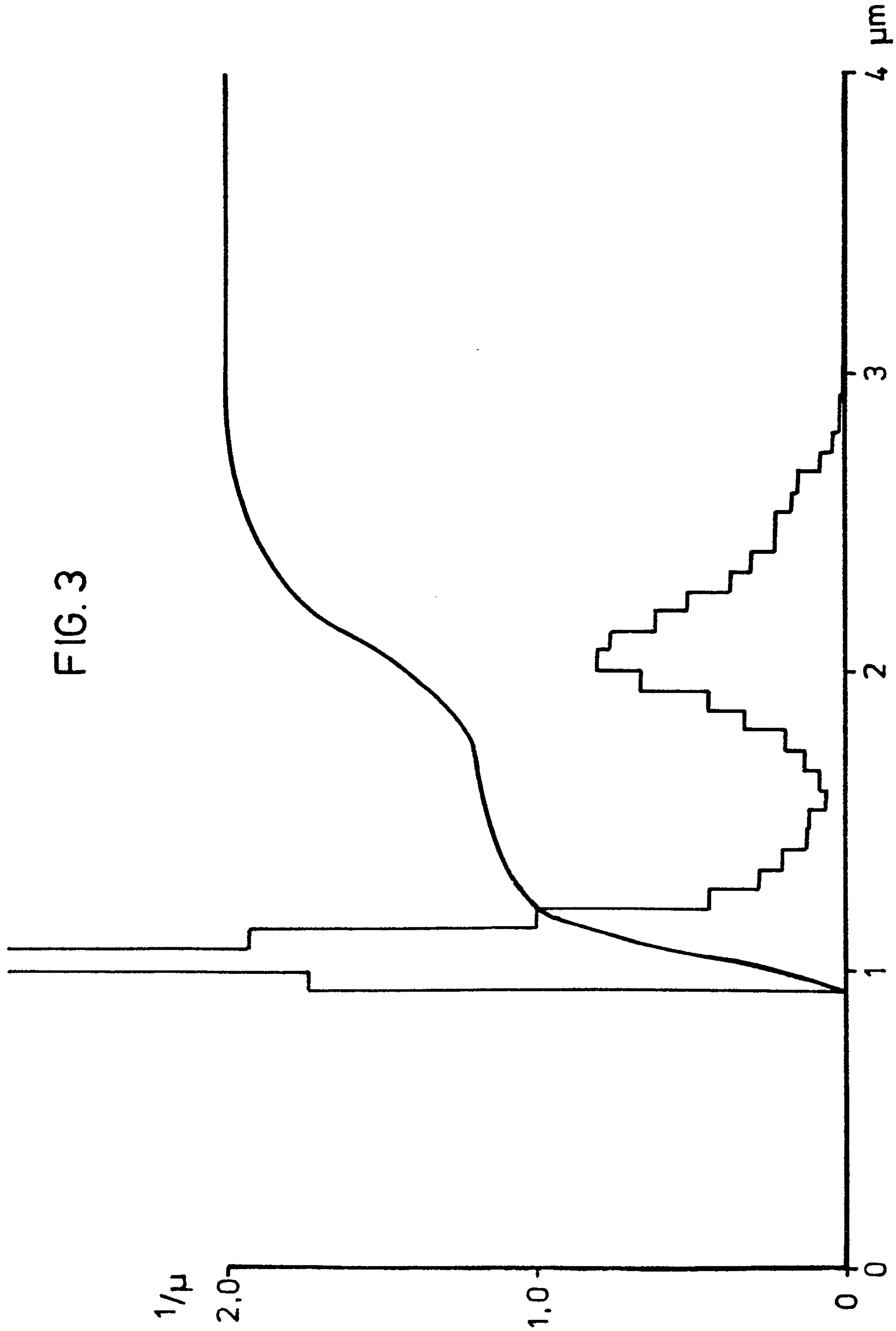


FIG. 3

FIG. 4

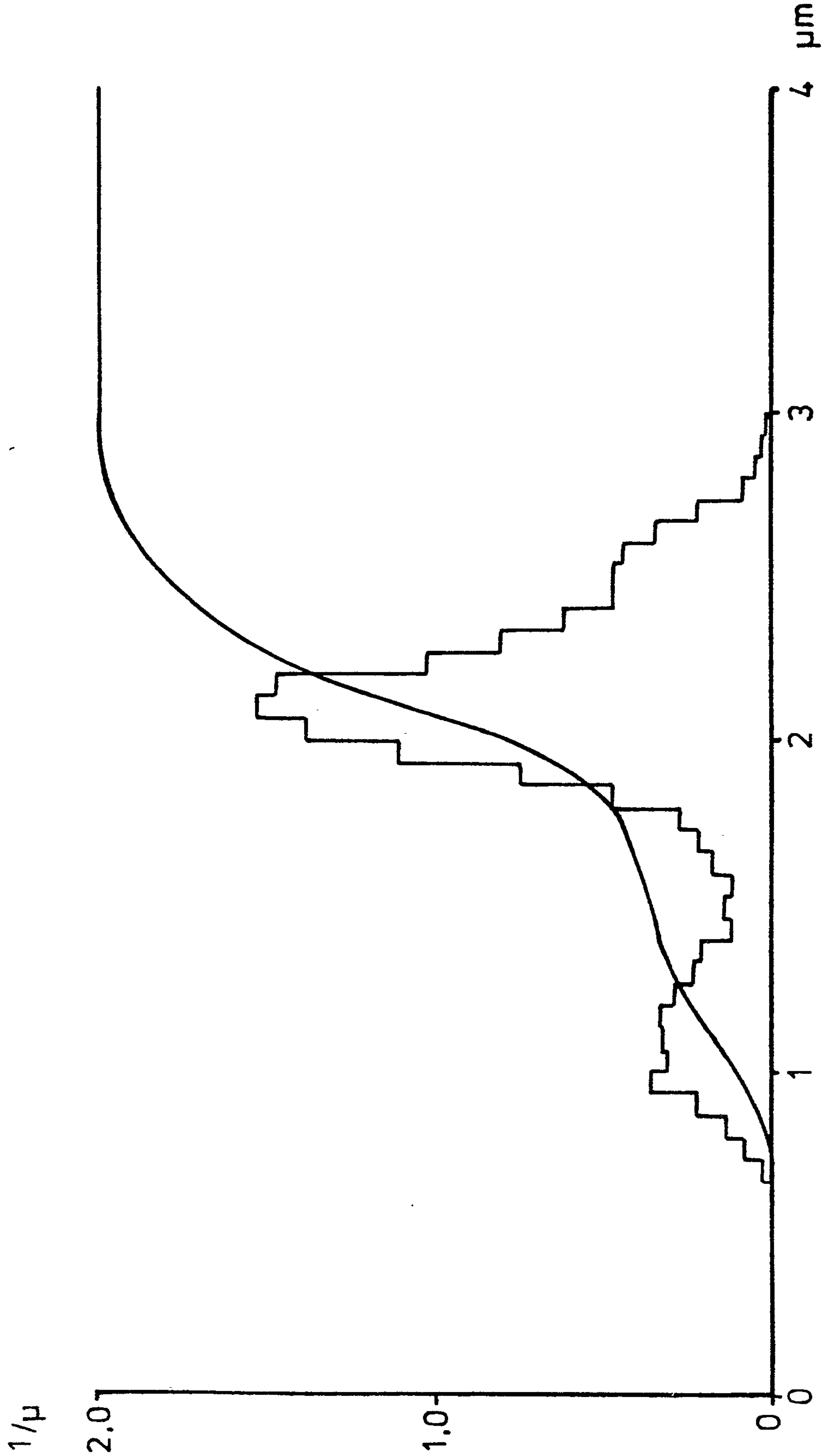

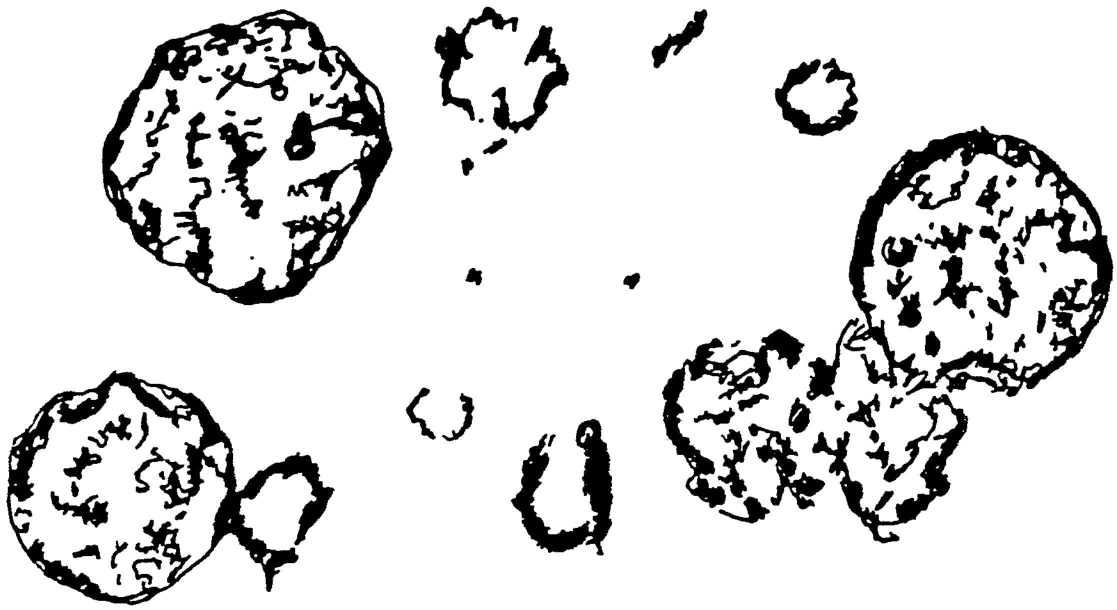

FIG. 5

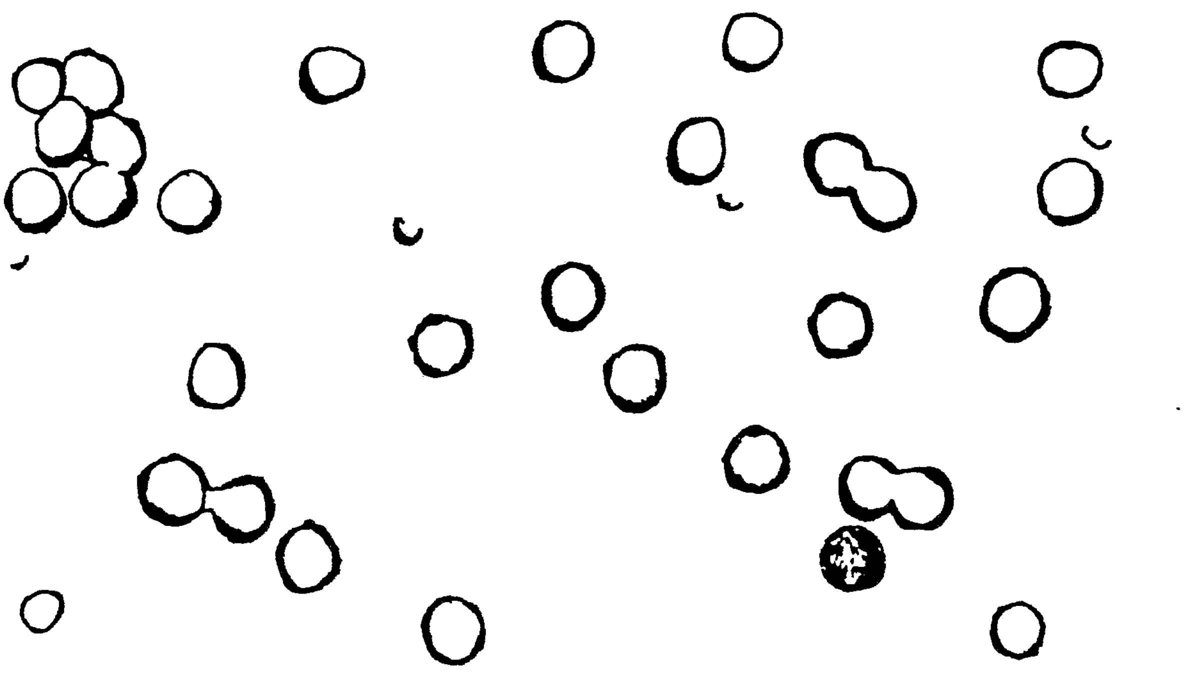

FIG. 6